# EUROPEAN PATENT APPLICATION

(11) **EP 4 488 832 A1**
(43) Date of publication of application: **08.01.2025**
(21) Application number: 23306161.3
(22) Date of filing: 07.07.2023
(51) Int. Cl.: G06F 9/48, G06F 9/50, G06N 10/60

(54) **METHOD FOR MANAGEMENT OF PROCESSING RESOURCES AND APPARATUS FOR IMPLEMENTING THE SAME**

(71) Applicant: Bull SAS, 78340 Les Clayes-sous-Bois (FR)
(72) Inventor: GAZDA, Arnaud, 78000 VERSAILLES (FR); LAMBERT, Cyprien, 78000 VERSAILLES (FR); SOYEZ, Erik, 78713 SCHRAMBERG (DE)
(74) Representative: Plasseraud IP

(57) **Abstract**

A method for processing a computer job to be executed on a hybrid computer configured with processing resources comprising one or more central processing unit, CPU, processing resources and at least one quantum processing unit, QPU, processing resources, the method comprising, wherein the computer job comprises a quantum computation part to be executed on the at least one QPU processing resources: Processing the computer job by a first scheduler of the hybrid computer, which comprises: Upon receiving a request for quantum processing resources for execution of the computer job, offloading the scheduling of a portion of the computer job comprising the quantum computing part on processing resources of the hybrid computer to a second scheduler of the hybrid computer; and receiving, by the first scheduler, status data regarding execution of the portion of the computer job comprising the quantum computing part.

## Description

The present subject disclosure relates to the field of quantum computing, in particular to the management of quantum processing resources in a hybrid computing environment.

Quantum Computing is a field of computer science designed to solve some advanced problems faster than a classical computer, by using quantum mechanics. In this context, the term "classical" is often used to refer to a computer, a computing environment, a computing device (e.g. a processor) or a computing field which, as opposed to a reference to the term "quantum", does not use quantum mechanics.

The emerging field of Quantum Computing will have a significant impact in High Performance Computing (HPC), as HPC is already reaching the limit of classical computing. Consequently, HPC centers that only use classical computing may evolve to integrate quantum devices such as one or more Quantum Processing Units (QPUs) in the near future, to prepare for this new quantum revolution.

Hybrid computing environments that include both classical processing resources and quantum processing resources are therefore being considered for execution of hybrid computing jobs which comprise one or more quantum computing parts and one or more non-quantum computing parts, with the quantum computing resource(s) being viewed as expensive resources as compared to non-quantum processing resources.

However, the integration of quantum computing in classical computing environments presents a number of challenges with respect to use of the quantum processing resources.

There is therefore a need for an improved method for processing a computer job to be executed on a hybrid computer that addresses the drawbacks and shortcomings of the conventional technology in the art.

In particular, it is an object of the present subject disclosure to provide an improved method for processing a computer job to be executed on a hybrid computer that addresses the drawbacks and shortcomings of the conventional technology in the art.

Another object of the present subject disclosure is to provide an improved method for managing resources allocated to the execution of a computer job on a hybrid computer that addresses the drawbacks and shortcomings of the conventional technology in the art.

Yet another object of the present subject disclosure is to provide an improved method for allocating processing resources in a hybrid computer environment.

To achieve these objects and other advantages and in accordance with the purpose of the present subject disclosure, as embodied and broadly described herein, in one aspect of the present subject disclosure, a method for processing a computer job to be executed on a hybrid computer configured with processing resources comprising one or more central processing unit (CPU) processing resources and at least one quantum processing unit (QPU) processing resources is proposed. The computer job may comprise a quantum computation part to be executed on the at least one QPU processing resources, and may further comprise a non-quantum computation part to be executed on the one or more CPU processing resources. The proposed method may comprise: processing the computer job by a first (e.g. multi-resource) scheduler of the hybrid computer (which may be referred to as a "high-level scheduler"), wherein the first scheduler is configured for scheduling the processing of computation tasks by processing resources of the hybrid computer among the one or more CPU processing resources and the at least one QPU processing resources. According to the proposed method, the processing of the computer job by the first scheduler may comprise: Upon receiving a request for quantum processing resources for execution of the computer job, offloading the scheduling of a portion of the computer job comprising the quantum computing part on processing resources of the hybrid computer to a second scheduler (which may be referred to as a "low-level scheduler") of the hybrid computer. The second scheduler may be configured for scheduling the processing of computation tasks by the at least one QPU processing resources of the hybrid computer.

In one or more embodiments, according to the proposed method, the processing of the computer job by the first scheduler may further comprise receiving, by the first scheduler, status data regarding execution of the portion of the computer job comprising the quantum computing part.

Advantageously, the present subject disclosure provides methods in which two scheduler are used in a hybrid computer environment, instead of using in a hybrid computer environment one scheduler which handles both computer jobs which comprise a quantum computing part and computer jobs which do not comprise any quantum computing part. Using two schedulers advantageously allows using a first, high-level, scheduler, which is configured for handling both computer jobs comprising a quantum computation part and computer jobs involving only classical (non-quantum) computations, as well as a second, low-level, scheduler for handling those computer jobs having a quantum computation part. The two schedulers may advantageously be configured to operate in a coordinated manner. For example, the first, high-level scheduler may be configured to outsource the scheduling of a quantum computing part detected in a processed computing job to the low-level scheduler which is specifically configured for handling quantum computing jobs.

In one or more embodiments, the proposed method may further comprise: scheduling, by the second scheduler, processing of the portion of the computer job comprising the quantum computing part by the at least one QPU processing resources of the hybrid computer.

In one or more embodiments, the proposed method may further comprise: allocating, by the first scheduler, a virtual quantum computing resource for execution of the quantum computation part by a QPU processing resource of the at least one QPU processing resources of the hybrid computer.

In one or more embodiments, the virtual quantum computing resource may be mapped with the QPU processing resource of the at least one QPU processing resources of the hybrid computer.

In one or more embodiments, the proposed method may further comprise: executing, by the QPU processing resource mapped with the virtual quantum computing resource, the quantum computing part.

In one or more embodiments, executing the quantum computing part by the virtual quantum computing resource may comprise: requesting, from the second scheduler, scheduling of processing of the quantum computing part by the at least one QPU processing resources of the hybrid computer.

In one or more embodiments, the virtual quantum computing resource may receive an execution status for the quantum computing part from the second scheduler.

In one or more embodiments, the proposed method may further comprise: inputting, by the second scheduler, the portion of the computer job comprising the quantum computing part to a queue of computer jobs waiting to be executed by the at least one QPU processing resources of the hybrid computer.

In one or more embodiments, the quantum computation part may be fetched in the queue for execution by one of the at least one QPU processing resources of the hybrid computer.

In one or more embodiments, the proposed method may further comprise, by a quantum resource watch computer job running on the hybrid computer: pinging for status one of the at least one QPU processing resources, and upon determining a failing status of the one of the at least one QPU processing resources further to the pinging of the one of the at least one QPU processing resources, removing the one of the at least one QPU processing resources from a pool of available QPU processing resources for processing the computer job.

In one or more embodiments, the proposed method may further comprise: setting a virtual quantum computing resource corresponding to the one of the at least one QPU processing resources as non-available for processing the computer job.

In one or more embodiments, the proposed method may further comprise: rescheduling, by the second scheduler, running computer jobs scheduled for execution by the one of the at least one QPU processing resources.

In one or more embodiments, the computer job further may comprise a non-quantum computation part to be executed on the one or more CPU processing resources, and one or more of the at least one QPU processing resources may have non-quantum processing capabilities, and the proposed method may further comprise: allocate, by the first scheduler, a virtual quantum computing resource for execution of the quantum computation part by the one or more of the at least one QPU processing resources of the hybrid computer, and a virtual non-quantum processing resources for execution of one or more parts of the non-quantum computation part by the one or more of the at least one QPU processing resources of the hybrid computer.

In one or more embodiments, the virtual quantum processing resources and virtual non-quantum processing resources may be mapped with a QPU processing resource of the at least one QPU processing resources of the hybrid computer.

In one or more embodiments, the proposed method may further comprise: executing, by the QPU processing resource mapped with the virtual quantum processing resources and the virtual non-quantum processing resources, the quantum computing part and the one or more parts of the non-quantum computation part.

According to another aspect of the present subject disclosure, an apparatus (e.g. a hybrid computer system comprising both classical and quantum computation resources) is proposed, which comprises a processor, and a memory operatively coupled to the processor. The proposed apparatus is configured to perform embodiments of the proposed methods according to the present subject disclosure.

According to yet another aspect of the present subject disclosure, a non-transitory computer-readable medium encoded with executable instructions which, when executed on a non-quantum computer, causes a processor of the non-quantum computer, that is operatively coupled with a memory, to perform embodiments of the proposed method according to the present subject disclosure, is proposed.

According to yet another aspect of the present subject disclosure, a computer program product comprising computer program code tangibly embodied in a computer readable medium, said computer program code comprising instructions to, when provided to a non-quantum computer system and executed, cause said computer to perform embodiments of the proposed method according to the present subject disclosure, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1a is a block diagram illustrating an exemplary architecture of a computing environment for implementing the proposed method, in accordance with one or more embodiments;
Figure 1b is a block diagram illustrating an exemplary computer job that comprises a quantum computation part which may be processed in accordance with one or more embodiments;
Figures 1c and 1d are block diagrams illustrating strategies for scheduling a computer job that comprises a quantum computation part using a classical scheduler;
Figure 2 is a flow chart illustrating an exemplary method for processing a computer job to be executed on a hybrid computer, in accordance with one or more embodiments;
Figure 3a is a block diagram illustrating an exemplary architecture of a hybrid computing environment in accordance with one or more embodiments;
Figure 3b is a flow chart illustrating an exemplary resource reservation by a high-level scheduler in accordance with one or more embodiments;
Figure 3c is a flow chart illustrating an exemplary resource reservation by a high-level scheduler in accordance with one or more embodiments;
Figure 3d is a flow chart illustrating an exemplary resource reservation by a high-level scheduler in accordance with one or more embodiments;
Figure 4 is a flow chart illustrating an exemplary processing of a computer job in accordance with one or more embodiments;
Figure 5 is a flow chart illustrating an exemplary offloading of a computer job part in accordance with one or more embodiments;
Figure 6a is a block diagram illustrating an exemplary architecture of a hybrid computing environment in accordance with one or more embodiments;
Figure 6b is a flow chart illustrating an exemplary resource reservation by a high-level scheduler in accordance with one or more embodiments;
Figure 7 is a diagram illustrating an exemplary architecture of a computer system for implementing the proposed method, in accordance with one or more embodiments.

### Description of embodiments

The advantages, and other features of the components disclosed herein, will become more readily apparent to those having ordinary skill in the art form. The following detailed description of certain preferred embodiments, taken in conjunction with the drawings, sets forth representative embodiments of the subject technology, wherein like reference numerals identify similar structural elements.

For simplicity and clarity of illustration, the drawing figures illustrate the general manner of construction, and descriptions and details of well-known features and techniques may be omitted to avoid unnecessarily obscuring the discussion of the described embodiments of the subject disclosure. Additionally, elements in the drawing figures are not necessarily drawn to scale. For example, the dimensions of some of the elements in the figures may be exaggerated relative to other elements to help improve understanding of embodiments of the present subject disclosure. Certain figures may be shown in an idealized fashion in order to aid understanding, such as when structures are shown having straight lines, sharp angles, and/or parallel planes or the like that under real-world conditions would likely be significantly less symmetric and orderly.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose non quantum computer, special purpose non quantum computer or other programmable data processing apparatus to produce a machine, such that the computer program instructions or software code which execute on the non quantum computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, memory chip, RAM, ROM, EEPROM, smart cards, Solid State Drive (SSD) devices or Hard Disk Drive (HDD) devices, or any other suitable medium from that can be used to carry or store program code in the form of instructions or data structures which can be read by a computer processor. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, HTML, PHP, Java, Javascript, Python, and bash scripting.

Unless specifically stated otherwise, it will be appreciated that throughout the following description discussions utilizing terms such as processing, computing, calculating, determining, generating, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

The terms "quantum" or « quantum computing » as used in the present subject disclosure are intended to cover any computer, computing system, processing or computing operation, configured to use or exploit quantum mechanical phenomena. A computer, processor, calculator, computing system, computing node, computing task, computer job, processing, algorithm, and processing resource configured to use or exploit quantum mechanical phenomena will be referred to herein as "quantum" (a quantum computer, quantum processor, quantum calculator, quantum computing system, quantum computing node, quantum computing task, quantum computer job, quantum processing, quantum algorithm, and quantum processing resource, respectively. In contrast, a computer, processor, calculator, computing system, computing node, computing task, computer job, processing, algorithm, and processing resource which is not configured to use or exploit quantum mechanical phenomena may be referred to herein as "classical" or "non-quantum" (a classical computer, classical processor, classical calculator, classical computing system, classical computing system, classical computing node, classical computing task, classical computer job, classical algorithm, classical processing, classical processing resource, respectively). A quantum processor (also referred to herein as a quantum processing unit (or QPU)) may be configured to perform both quantum processing and classical processing.

The term « hybrid » as used in the present subject disclosure, for example as applied to a computer, an algorithm, a computer task, a computer job, refers to the combination of classical and quantum.

Additionally, the word "exemplary" as used herein means serving as an example, instance, or illustration. Any aspect or design described herein as "exemplary" is not necessarily to be construed as preferred or advantageous over other aspects or designs.

The present subject disclosure may advantageously be implemented on any suitable computing environment comprising a hybrid computer configured with one or more classical resources (e.g. one or more CPUs) and one or more quantum processing resources (e.g. one or more QPUs), such as a hybrid HPC cluster, an electronic component, an electronic chipset, a QPU, an electronic circuit-board, an electronic circuit, etc.

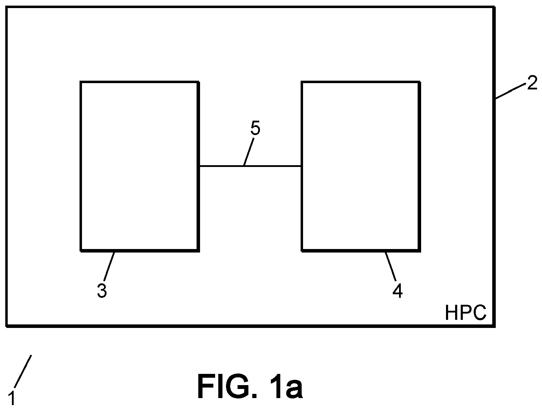

Figure 1a illustrates a computing environment (1) in which the proposed method may advantageously be implemented.

The computing environment (1) may typically be a High Performance Computing (HPC) environment which comprises one or more HPC center (2).

The exemplary HPC center (2) shown on Fig. 1a may be viewed as an exemplary hybrid computing environment in that it may comprise a classical computing cluster (e.g. a HPC cluster) (3) comprising classical resources, that is, non-quantum computation resources (e.g. one or more non-quantum processors, such as CPUs), as well as a quantum computing unit (4) comprising quantum resources (e.g. one or more quantum processors, such as QPUs). In some embodiments, the classical computing cluster (3) and the quantum computing unit (4) may be operatively connected, for example via any suitable data communication bus (5).

In some embodiments, the HPC center (2) comprises a first scheduler, for example of the type configurable for managing classical resources of the classical computing cluster (3).

In one or more embodiments, the scope of management of the first scheduler may be extended to management of all types of computation resources of the HPC center (2). That is, the first scheduler may be configured for managing classical resources of the computing cluster (3) as well as quantum resources of the quantum computing unit (4). In some embodiments, the first scheduler may therefore be a function (which may be, in all or in part, implemented in software) tasked with managing the allocation of any of the processing resources of the HPC center (2) to computer jobs to be executed.

Various allocation schemes may be considered, and the first scheduler may for example be designed to fairly share resources among users. For example, based on a user submitting a computation with a set of parameters (type of resources, number of resources, etc.), the first scheduler may be configured to execute this computation "at the best time".

In one or more embodiments, the first scheduler may typically be configured for one or more of: (1) Maximizing the usage of the more expensive resource(s) (in the case of a hybrid HPC, the quantum computing resource(s)), (2) Fairly sharing resources between users (based on a specific policy), and (3) Avoiding resource conflict, so that a resource be used by a single job at a given time.

Some features of today's quantum devices are such that a typical scheduler of a classical HPC (hereinafter referred to as a "classical scheduler") cannot be used in a hybrid HPC environment using both classical processing resources and quantum processing resources.

For example, today's quantum devices are not robust enough to be a schedulable resource using such a classical scheduler.

In addition, today's quantum devices are noisy, which tends to degrade the quality of computations performed using quantum devices. The following good practices are commonly used to mitigate these noise phenomena:
First, quantum devices are often calibrated, which results in a low availability rate of quantum devices as compared to that of classical devices, as performing calibration of a quantum device requires removing the device from the computation cluster in which it is installed. In addition, removing a quantum device can be done without notifying the cluster, which contradicts an assumption made by classical schedulers that resources are always available.

In addition, because a long quantum computation would lead to random results, a pure quantum computation is typically short as compared to a classical computation (the duration of a pure computation job (using superconducting qubits) typically lies in a range of 10⁻² seconds (for a large quantum job) to 10⁻⁶ seconds (for single shots)). In order to benefit from these short pure quantum computations, a computer job is often composed of sequence of parts mixing one or more quantum computation parts and one or more classical computation parts. Classical schedulers are not designed to manage such computations involving quantum computation parts and classical computation parts.

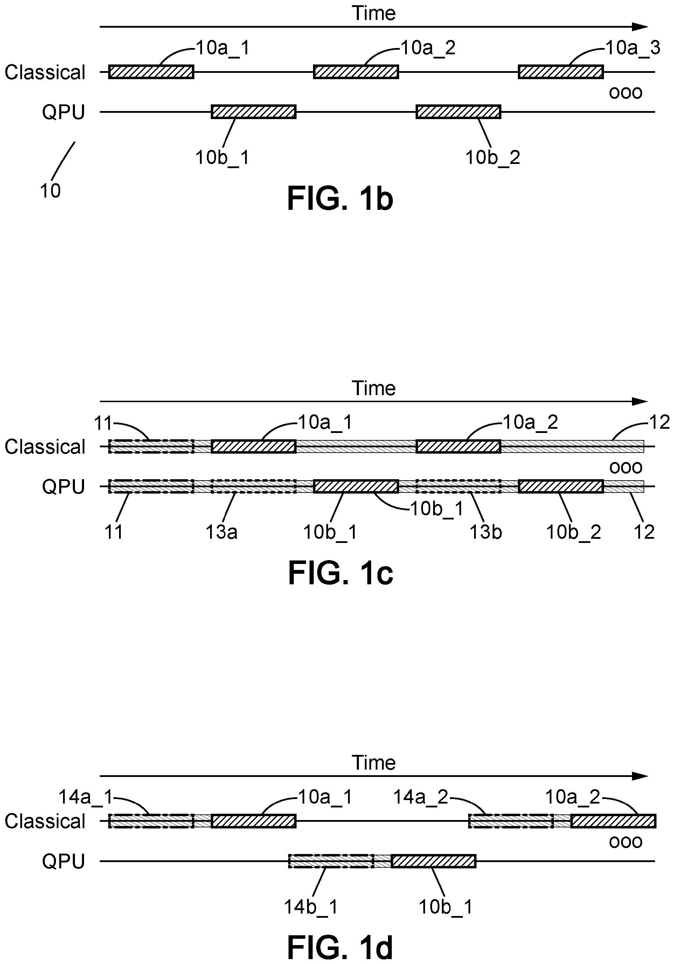

Fig. 1b illustrates an exemplary computer job that comprises a quantum computation part.

Shown on Fig. 1b is an exemplary typical computer job (10), which is composed of a sequence of computation parts combining several classical computation parts (10a_1, 10a_2, and 10a_3) and several quantum computation parts (10b_1 and 10b_2) to be executed sequentially over time. The illustrated respective sizes of the classical computation parts and quantum computation parts are not at scale and are for clarity purposes of Fig. 1b.

The classical computation parts (10a_1, 10a_2, and 10a_3) of the computer job (10) may be executed on classical computation resources (e.g. one or more CPUs) of a hybrid computing environment (such as the one illustrated by Fig. 1a), while the quantum computing parts (10b_1 and 10b_2) of the computer job (10) may be executed on quantum computation resources (e.g. one or more QPUs) of the hybrid computing environment. In the example of Fig. 1b, execution of the computer job (10) may involve execution of a first classical computation part (10a_1), followed by execution of a first quantum computation part (10b_1), followed by execution of a second classical computation part (10a_2), followed by execution of a second quantum computation part (10b_2), followed by execution of a third classical computation part (10a_3), etc.

Two different strategies, respectively illustrated by Fig. 1c and Fig. 1d, may be considered to schedule, in a hybrid computing environment, a computer job comprising a quantum computation part (such as the exemplary computer job (10) illustrated by Fig. 1b) using a classical scheduler such as the scheduler (3) of Fig. 1a.

According to a first strategy illustrated by Fig. 1c, the quantum processing resources (e.g. one or more QPUs) and the classical processing resources (e.g. one or more CPUs) are allocated by the classical scheduler for the entire execution of the computer job (10).

However, allocating a computing resource to the computer job (10) implies that the allocated computing resource, whether a classical computing resource or a quantum computing resource, cannot be used by another computer job.

As illustrated by Fig. 1c, once the (classical) scheduler allocates (11) both classical processing resources and quantum processing resources of the hybrid computing environment, both of the allocated classical processing resources and quantum processing resources are reserved (12) for execution of the computer job (10), and therefore no longer usable for execution of another job during execution of the computer job (10).

As a consequence, the quantum processing resources are locked for the entire execution time of the computer job (10), even though such quantum processing resources are idle for most of such execution time, as execution of the quantum computation parts (10b_1 and 10b_2) is much shorter than execution of the classical computation parts (10a_1, 10a_2, and 10a_3). In the example illustrated by Fig. 1c, the quantum processing resources (QPU) are idle (13a, 13b) during the execution of the first classical computation part (10a_1) and during the execution of the second classical computation part (10a_2), and are used only for execution of the first and second quantum computation parts (10b_1 and 10b_2). This contradicts one of the purposes of the scheduler, which is to efficiently use processing resources, including maximizing quantum computing resource usage.

As it leads to locking the quantum processing resources for the entire time of execution of the hybrid computer job, which results in the quantum processing resources being idle for most of such execution time, the first strategy is not optimal in the context of using a single scheduler (typically a classical scheduler) in a hybrid computing environment for scheduling computer jobs which comprise one or more quantum computing parts along with classical computing parts.

According to another strategy illustrated by Fig. 1d, the computation may be split into independent computation tasks which are scheduled independently of each other. The (classical) scheduler may allocate a resource on a case-by-case basis, in a specific time sequence as processing resources may be allocated to a task requiring results of a preceding task. As a consequence a task may be scheduled only if the previous task ended.

As illustrated by Fig. 1d, the first classical computation task (1 0a_1) may first be scheduled (14a_1) and the classical computation resources may be allocated to execute the first classical computation task (10a_1). Only once execution of the first classical computation task (10a_1) is completed, the first quantum computation task (10b_1) may be scheduled (14b_1) and the quantum computation resources may be allocated to execute the first quantum computation task (10b_1). Only once execution of the first quantum computation task (10b_1) is completed, the second classical computation task (10a_2) may be scheduled (14a_2) and the classical computation resources may be allocated to execute the second classical computation task (10a _2), etc.

Allocating a computing resource to the computer job (10) still implies that the allocated computing resource cannot be used by another computer job. In contrast to the first strategy, the processing resources (in particular the quantum processing resources), are not locked for the entire execution time of the computer job (10).

However, this strategy slows down execution of a computer job because it requires frequently re-allocating processing resources. It can also lead to further slowing down execution of several computer jobs in a case where many jobs are concurrently using the same QPU, meaning that the time between start and finish of execution of each computer job could be very long.

In addition, this strategy does not completely address the idleness issue discussed with respect to the first strategy, because no computation can occur during the allocation of computation resources. However, the amount of time required for allocating quantum processing resources may be large as compared to the time of execution of a quantum computing part using the allocated quantum computation resources, which leads to a quantum resource usage rate which is still low.

As a consequence, this second strategy, which also has several drawbacks, is not optimal in the context of using a single scheduler (typically a classical scheduler) in a hybrid computing environment for scheduling computer jobs which comprise one or more quantum computing parts along with classical computing parts.

Some of the strategies that could be contemplated for configuration of a classical scheduler of an HPC center when used in a hybrid HPC center would therefore present significant drawbacks. However, replacing the classical scheduler of an HPC center when transitioning from a classical HPC center to a hybrid one for alleviating these drawbacks would raise other concerns, for the most part resulting from the complexity of the HPC scheduler replacement task. HPC schedulers are very large development projects, so that replacing an HPC scheduler would likely be very costly, both development and integration-wise. In addition, whether or not a scheduler with the capabilities of currently used HPC schedulers could be fast enough and therefore not suffer from the above-mentioned drawbacks remains to be seen.

Instead, the present subject disclosure introduces the concept of multi-scheduling, which through use of a plurality of schedulers allows operating in a hybrid computing environment using multi-level scheduling. Integration of quantum devices inside an HPC center using an existing scheduler can therefore be greatly simplified by using a second scheduler which is dedicated to scheduling quantum computation tasks on quantum computation resources of the HPC centers, while the existing scheduler, being the first scheduler of the HPC center configured for handling the scheduling of any computer job, is configured to interoperate with the second scheduler to which the scheduling of quantum computation tasks is offloaded.

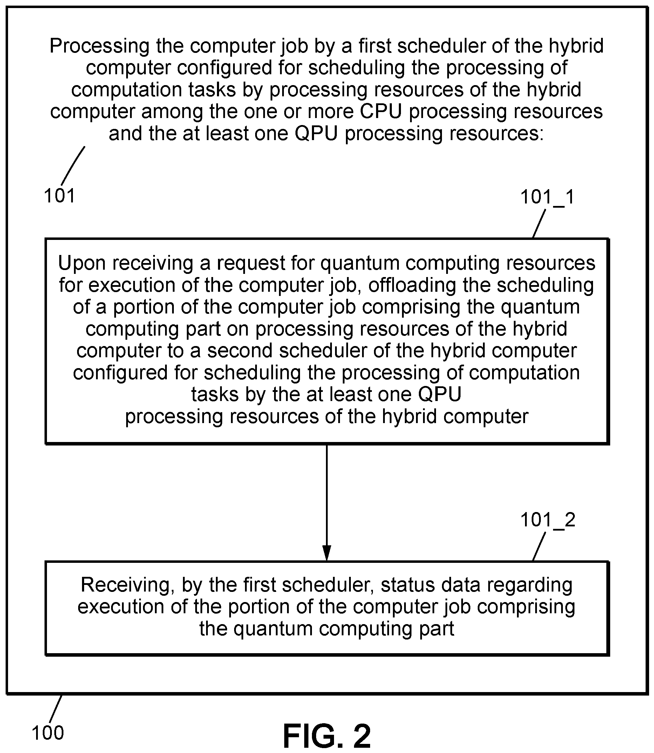

Fig. 2 shows a block diagram illustrating the processing (100) of a computer job to be executed on a hybrid computer according to embodiments of the present subject disclosure.

One may consider a hybrid computer configured with processing resources comprising one or more central processing unit, CPU, processing resources and at least one quantum processing unit, QPU, processing resources, such as for example the HPC center (2) of Fig. 1a.

The computer job to be executed on the hybrid computer comprises at least one quantum computation part to be executed on the at least one QPU processing resources of the hybrid computer. In one or more embodiments, the computer job to be executed on the hybrid computer may also comprise a non-quantum computation part to be executed on the one or more CPU processing resources, and therefore comprise a combination of one or more quantum computation parts and one or more classical (non-quantum) computation parts, such as the exemplary computer job illustrated on Fig. 1b.

In one or more embodiments, the hybrid computer may be configured with two computation task schedulers : a first scheduler, which may be indifferently referred to herein as the "multi-resource" scheduler or the "high-level" scheduler, configured for scheduling the processing of computation tasks by processing resources of the hybrid computer among the one or more CPU processing resources and the at least one QPU processing resources, and a second scheduler, which may be referred to herein as the "low-level" scheduler, configured for scheduling the processing of computation tasks by the at least one QPU processing resources of the hybrid computer.

As the computer job comprises one or more quantum computation parts to be executed on a QPU processing resource of the hybrid computer, execution of the computer job will involve use of a QPU processing resource of the hybrid computer. Accordingly, in one or more embodiments, the first scheduler will receive a request for quantum processing resources in order to execute the computer job. Depending on the embodiment, the request received by the first scheduler may originate (directly or indirectly) from various sources, such as, for example, a user (of a hybrid computer or apparatus according to an embodiment of the present subject disclosure), through a user interface unit or a user management unit, a system management unit or any other suitable unit. In some embodiments, the first scheduler may be implemented as a unit of a user management system of a hybrid computer.

In one or more embodiments, the processing (101) of the computer job by the first scheduler may comprise the following operations: Upon receiving a request for quantum processing resources for execution of the computer job, the first scheduler may be configured to offload (101_1) the scheduling of a portion of the computer job comprising the quantum computing part on processing resources of the hybrid computer to the second scheduler.

Once the scheduling of the portion of the computer job comprising the quantum computing part has been offloaded to the second scheduler, the first scheduler may receive (101_2) status data regarding execution of the portion of the computer job comprising the quantum computing part.

In some embodiments, the first scheduler may advantageously be configured for merely handling the processing of quantum computing parts of a computer job to be executed by offloading the scheduling of such quantum computing parts to a second scheduler which may be specifically configured for handling the processing of such quantum processing parts. As a consequence, the above-mentioned limitations faced by a single scheduler which handles both quantum computing parts and non-quantum computing parts (e.g. QPUs being idle for long periods of time as compared to duration of their use) can be alleviated through the use of the second scheduler which is specifically configured for handling quantum computing parts to be executed on quantum processing resources of the hybrid computer.

As the second scheduler may be provided in addition to the first scheduler for handling the scheduling of quantum computing jobs on quantum processing resources, strategies specifically designed for improving efficiency of the execution of quantum computing jobs may advantageously be used at the second scheduler, resulting in an improved (including more efficient) usage of quantum processing resources of the hybrid computer.

As a result of the use of two schedulers according to the present subject disclosure, efficiency of the usage of the quantum processing resources (e.g. QPUs) of the hybrid computer may be improved. Optimizing usage of quantum processing resources (e.g. QPUs) of a hybrid computer is particularly advantageous as quantum processing resources are typically the costliest resources when introduced in HPC environments.

For example, referring back to the exemplary computer job (10) shown on Fig. 1b, the scheduling of each of the classical computation parts (10a_1, 10a_2, and 10a_3) of the computer job (10) on classical processing resources of the hybrid computer may be handled directly by the first scheduler, which in contrast may handle each of the quantum computation parts (10b_1 and 10b_2) of the computer job (10) by offloading the scheduling of such quantum computation parts (10b_1 and 10b_2) to the second scheduler. As a result, the scheduling of execution of each of the quantum computation parts (10b_1 and 10b_2) of the computer job (10) on quantum computation resources of the hybrid computer may be performed by the second scheduler, which may advantageously be specifically designed for scheduling quantum computation tasks on quantum processing resources.

In one or more embodiments, the first scheduler (high-level scheduler) may be configured to implement one or more of the following scheduling strategies: fair-share of managed resources, and user management. For example, the first scheduler may be configured to implement a fair-share type scheduling strategy, and may perform accordingly to the extent that use of quantum computing resources are managed by the first scheduler only. In contrast, as the scheduling of quantum computation tasks is offloaded to the second scheduler according to embodiments of the present subject disclosure, operations of the first scheduler may result in a degraded fair-share of quantum processing resources, as well as occurrence of a latency during allocation of resources (as may likely be the case for any job processed by the first scheduler).

In one or more embodiments, the first scheduler may be designed to operate with a time range from 10⁻¹ to 10⁶ seconds, and may for example be implemented in software with any suitable HPC scheduler (e.g. as or in combination with a conventional HPC batch system, such as for example Slurm (Simple Linux Utility for Resource Management), LSF (Platform Load Sharing Facility), PBS (Portable Batch System), or a grid computing computer cluster such as Gridengine).

In one or more embodiments, the second scheduler (low-level scheduler) may be configured to specifically handle the scheduling of quantum computation tasks for execution by quantum processing resources of the hybrid computer. For example, the second scheduler may be configured to implement one or more of the following scheduling strategies: simple scheduling model, and no user management, in order to operate with a very low latency, such as to optimize efficiency of usage of the quantum processing resources of the hybrid computer.

In one or more embodiments, in contrast to the first scheduler, the second scheduler may be designed to operate with a time range from 10⁻⁴ to 10⁻² second, and may for example be implemented in software as a low-latency scheduler specifically designed for scheduling execution quantum computation tasks on quantum processing resources.

For example, assuming a situation where a computer job is submitted to an HPC containing QPUs, the computer job comprising one or more quantum components. In some embodiments, the computer job may scheduled by the high-level scheduler of the HPC. The scheduling operations performed by the high-level scheduler may comprise submitting the quantum components, or tasks, if any, of the computer job, to the low-level scheduler, during execution of the computer job.

In some embodiments, the first (High-level, HPC) scheduler may not have knowledge as to whether a computer job has quantum components or not. In such cases, the computer job may specify that it should be executed on specific processing nodes of the HPC which can communicate with the second (low-level, QPU) scheduler.

The proposed multi-level scheduling design advantageously allows alleviating several drawbacks of the above-described scheduling strategies when using only one scheduler, including for example:
Several computer jobs may submit concurrent tasks to a given quantum processing resource (e.g. QPU); and
Quantum tasks submissions can take advantage of the very short latency of the low-level scheduler, rather suffering from than that of the high-level scheduler.

In one or more embodiments, the offloading of the scheduling of the portion of the computer job comprising the quantum computing part on processing resources of the hybrid computer to the second scheduler may comprise issuing, to the second scheduler, a request for scheduling the portion of the computer job. The second scheduler may be configured for, upon receiving the request for scheduling the portion of the computer job, scheduling the processing of the portion of the computer job comprising the quantum computing part by the at least one QPU processing resources of the hybrid computer.

In one or more embodiments, the first scheduler may be configured for managing virtual quantum processing resources in addition to classical processing resources (e.g. CPU processing resources). Using virtual quantum processing resources managed by the first scheduler has many advantages, including that these virtual quantum processing resources can be assumed to be always available, these virtual quantum processing resources are not expensive (allocating virtual resources and not using them is not an issue), and several virtual quantum processing resources may point to the same quantum processing resource (e.g. the same QPU device).

In addition, using one or more virtual quantum processing resources advantageously allows using the scheduling strategy described in connection with Fig. 1c, according to which the classical processing resources and the virtual quantum processing resources may be allocated for tasks of a computer job during the whole duration of execution of the computer job. Using this scheduling strategy with virtual quantum processing resources is advantageous at least in that it does not slow down computation(s), and in that the quantum processing resource(s) of the hybrid computer system can be reused for another computer job as they are not reserved by the scheduler.

The scheduling strategy used with virtual quantum processing resources can therefore be inherited from a scheduling strategy already designed for a non-hybrid computer system with only classical processing resources, in that it may not need significantly updating a scheduling strategy developed for a computer system with classical processing resources, while preserving usage efficiency of the quantum processing resources in a hybrid computer. As a consequence, a smooth transitioning from a scheduling strategy design for a non-hybrid computer system with classical processing resources to a scheduling strategy design for a hybrid computer system with both classical and quantum processing resources may advantageously be provided.

Using virtual resources scheduling at the first scheduler in combination with offloading quantum computation tasks to a second scheduler may also advantageously result in performing a fair-share balance of scheduling computation tasks (including quantum and non-quantum tasks) in embodiments where the first scheduler is designed/configured to implement a fair-share type scheduling strategy.

In one or more embodiments, the proposed method may thus further comprise the allocating, by the first scheduler, a virtual quantum computing resource for execution of the quantum computation part by a QPU processing resource of the at least one QPU processing resources of the hybrid computer.

Various numbers of virtual quantum processing resources (e.g. various numbers of QPU(s)) may be chosen depending on the embodiment, for example based on one or more of the quantum hardware present in the computer system and the typical use case for a computer job involving quantum computations. Depending on the embodiment, the number of virtual quantum processing resources may have an impact on the duration of execution of a computer job and/or on the amount of idleness of the quantum processing resources associated with virtual quantum processing resources.

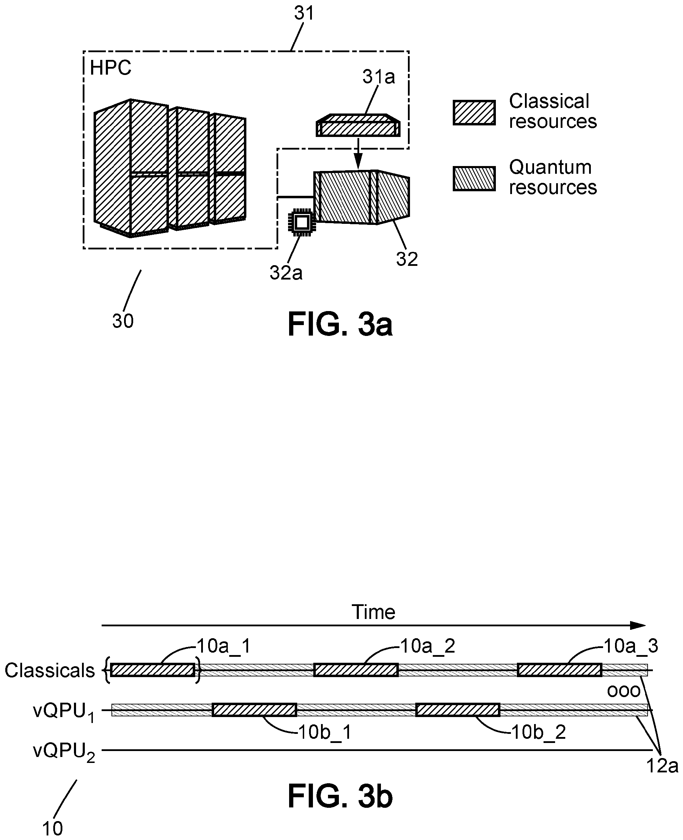

Fig. 3a shows an exemplary architecture of a hybrid computing environment (30) according to one or more embodiments of the present subject disclosure.

Shown on Fig. 3a is a hybrid computing environment (30) comprising a HPC cluster (31) composed of classical, that is, non-quantum (e.g. CPUs), processing resources. In such embodiments, quantum processing resources (e.g. QPU processing resources) (32a) of the hybrid computing environment may be kept in a quantum cluster (32) separate, yet operatively connected to, the HPC cluster (31).

The architecture shown on Fig. 3a advantageously allows a smooth transition from a classical HPC cluster (with no quantum processing resources) with a scheduler managing classical processing resources to a HPC cluster in a hybrid computing environment with a scheduler managing both classical processing resources and virtual quantum processing resources: Advantageously, the HPC cluster (31) in the hybrid computing environment (30) may be implemented with any suitable HPC scheduler, such as Slurm.

In some embodiments, the virtual quantum computing resource may be mapped with the QPU processing resource of the at least one QPU processing resources of the hybrid computer. In such embodiments, the quantum computing part of the computer job may be executed by the QPU processing resource which is mapped with the virtual quantum computing resource allocated to the quantum computing part.

For example, as shown on Fig. 3a, in some embodiments, one or more of the virtual quantum resources may be attached to a node (31a) of the HPC cluster (31) of the hybrid computing environment (30). Such node (31a) may be configured to operate with the quantum cluster (32) so that addressing the virtual quantum resources attached to the node (31a) triggers an actual computation on the quantum processing resources (32a) of the quantum cluster (32).

In one or more embodiments, the high-level scheduler (e.g. the HPC scheduler of the HPC cluster (31) of Fig. 3a) may be configured to allocate both classical processing resources (e.g. CPUs) and virtual quantum processing resources.

Figure 3b shows an exemplary resource reservation by a high-level scheduler according to one or more embodiments of the present subject disclosure.

Fig. 3b illustrates a resource reservation for computing tasks of the exemplary computer job (10) illustrated by Fig. 1b, and illustrates a scheduling strategy to schedule, in a hybrid computing environment, a computer job comprising a quantum computation part (such as the exemplary computer job (10) illustrated by Fig. 1b) using a scheduler according to embodiments of the present subject disclosure, such as the scheduler of the HPC cluster (31) of Fig. 3a.

As discussed for Fig. 1b, execution of the computer job (10) may involve execution of a first classical computation part (10a_1), followed by execution of a first quantum computation part (10b_1), followed by execution of a second classical computation part (10a_2), followed by execution of a second quantum computation part (10b_2), followed by execution of a third classical computation part (10a_3), etc.

As illustrated by Fig. 3b, virtual quantum processing resources (vQPU1 and VQPU2) mappable to one or more quantum processing resources (e.g. a first and second QPUs) and classical processing resources (e.g. one or more CPUs) may be allocated by the proposed scheduler (e.g. of the HPC cluster (31)) for the entire execution of the computer job (10).

As illustrated by Fig. 3b, the proposed scheduler may operate in a similar manner to that of a classical scheduler, except that it manipulates virtual quantum processing resources instead of real quantum processing resources: Once the proposed scheduler allocates both classical processing resources and virtual quantum processing resources of the hybrid computing environment, both of the allocated classical processing resources and virtual quantum processing resources are reserved (12a) for execution of the computer job (10), and therefore no longer usable for execution of another job during execution of the computer job (10).

However, since only virtual quantum processing resources are reserved, the quantum processing resources are advantageously not locked for the entire execution time of the computer job (10), and may be used only for execution of the quantum computation parts (10b_1 and 10b_2) of the computer job (10), thereby optimizing the resource usage of the quantum processing resources of the hybrid computer. The reservation of classical processing resources for the entire execution time of the computer job (10) is not an issue, as such classical processing resources are usually not scarce in the hybrid computer. Likewise, the virtual quantum processing resource (vQPU1 and vQPU2 on Fig. 3b) not being an expensive resource, keeping such resource idle is not an issue.

In the example illustrated by Fig. 3b, from the standpoint of the high-level scheduler, resources are reserved for the execution of the quantum computation parts (10b_1 and 10b_2) of the computer job (10) according to the required sequence of processing of the different parts of such computer job (10).

In some embodiments, starting the execution of a quantum computation task (such as one of the quantum computation parts (10b_1 and 10b_2) of the computer job (10)) on a virtual quantum processing resource may trigger the offloading of the computation to a quantum processing resource of the hybrid computer. This offloading mechanism may be managed by the second (low-level) scheduler.

For instance, in one or more embodiments, the second (low-level) scheduler (32) may be configured for scheduling the execution of the quantum computation task on an actual quantum processing resource of the hybrid computer.

In some embodiments, the second (low-level) scheduler may be further configured for ensuring that all the virtual quantum processing resources attached to the same quantum processing resources (e.g. to the same QPU) are locked while such quantum processing resources are being used.

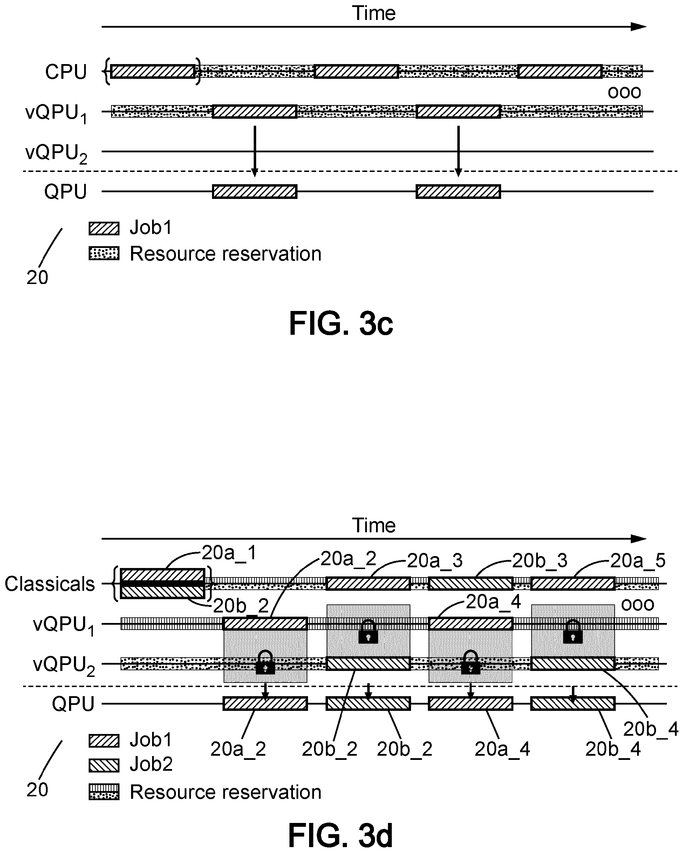

Figures 3c and 3d show an exemplary resource reservation of resources according to one or more embodiments of the present subject disclosure.

As illustrated by Fig. 3c and Fig. 3d, virtual quantum processing resources (vQPU₁ and vQPU₂) mappable to a single quantum processing resource (e.g. a single QPU) and a plurality of classical processing resources (e.g. a plurality of CPUs) may be allocated by the proposed scheduler (e.g. of the HPC cluster (31)) for the entire execution of a computer job (20).

As illustrated on Fig. 3c, the computer job (20) may be a hybrid computer job, and comprise quantum computing parts and classical computing parts.

According to embodiments of the present subject disclosure, the classical computing parts are scheduled by first (high-level) scheduler for execution on a classical processing resource (CPU). Scheduling of a quantum computing part may be offloaded to a second (low-level) scheduler through allocation of a virtual quantum processing resource (e.g. vQPU₁) to the quantum computing part.

As illustrated by Fig. 3c, in one or more embodiments, scheduling of the execution of a quantum computing task may advantageously be offloaded by a high-level scheduler to a low-level scheduler as proposed in the present subject disclosure through allocation, by the high-level scheduler, of such quantum computing task to a virtual quantum processing resource managed by the high-level scheduler. The second scheduler may advantageously be configured to manage scheduling the execution on a quantum processing resource (QPU) of the computer tasks which have been allocated to a virtual quantum processing resource.

As illustrated on Fig. 3d, the computer job (20) may comprise a first computer job ("Job 1") and a second computer job ("Job 2"), both of which may, at least for some parts, use of the quantum processing resource.

The first computer job and second computer jobs may both comprise a first part (20a_1, 20b_1) which may be allocated for execution in parallel by a first and second classical processing resources, respectively.

As there is only one quantum processing resource available, the parts of the first computer job (20a_2, 20a_4) and the second computer job (20b_2, 20b_4) which can use the single quantum processing resource may be allocated the resource in a sequential manner. In some embodiments, the second scheduler may be configured in some embodiments to lock a corresponding virtual quantum processing resource once it has been allocated the single quantum processing resource during execution of the part (of the first computer job or the second computer job). For example, during execution of a part (20a_2, 20a_4)) of the first computer job by the single quantum processing resource, the second scheduler operates to lock the single processing resource so that no part of the second computer job can use the single processing resource. The part (20b_3) of the second computer job which is not scheduled on the single processing resource while in a lock state may be scheduled as shown Fig. 3d on a classical processing resource. Conversely, during execution of a part (20b_2, 20b_4)) of the second computer job by the single quantum processing resource, the second scheduler operates to lock the single processing resource so that no part of the first computer job can use the single processing resource. The parts (20a_3, 20a_5) of the first computer job which are not scheduled on the single processing resource while in a lock state may be scheduled as shown Fig. 3d on a classical processing resource.

In embodiments where the proposed hybrid computer is configured with more virtual quantum processing resources than actual quantum processing resources (e.g. as illustrated by Fig. 3d, two virtual quantum processing resources vQPU₁ and vQPU₂ and a single quantum processing resource QPU), this locking mechanism advantageously provides that a plurality of jobs which may have been allocated to respective virtual quantum processing resources are properly queued for execution by the available quantum processing resource(s), and that execution of a job (or part thereof) on an available quantum processing resource is not interrupted for executing another job (or part thereof) on the same available quantum processing resource.

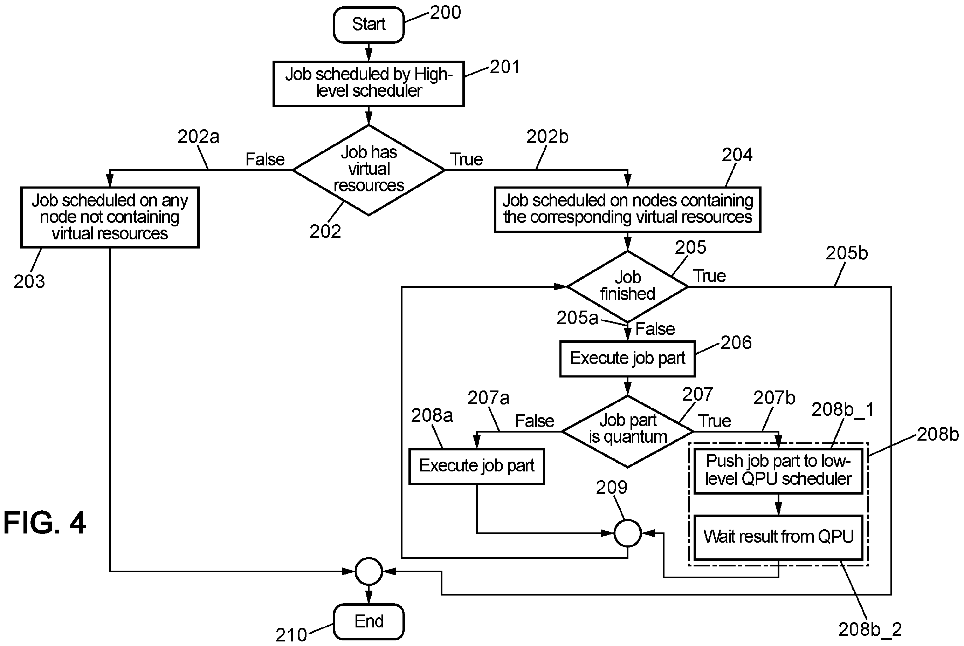

Fig. 4 shows a flowchart illustrating an exemplary processing of a computer job according to one or more embodiments of the present subject disclosure.

The flowchart of Fig. 4 may be used for scheduling a computer job to be executed in a hybrid computing environment using a multi-scheduler scheme as provided in the present subject disclosure. For example, the scheduling of computer jobs in a hybrid computing environment may be performed using a first (high level) scheduler and a second (low level) scheduler according to embodiments of the present subject disclosure.

In one or more embodiments, the scheduling of a computer job in a hybrid computing environment may start (200) with the processing of the computer job by the high-level scheduler of the hybrid computing environment, which comprises scheduling (201) the computer job by the high-level scheduler.

In some embodiments, as part of processing the computer job, the high-level scheduler may determine (202) whether scheduling the computer job will involve or not virtual resources.

In cases where scheduling the computer job does not (202a) involve virtual resources, the computer job may be scheduled (203) by the high-level scheduler on any computing node of the computer system which does not comprise virtual processing resources (e.g. a node of the system which comprises only classical processing resource(s)), further to which the scheduling of the computer job in the hybrid computing environment may end (210).

In cases where scheduling the computer job involves (202b) virtual resources, the computer job may be scheduled (204) by the high-level scheduler on one or more computing nodes which comprise virtual processing resources. Execution of the computer job may thereafter be undertaken, for example as a computer job execution loop as shown in Fig. 4.

In one or more embodiments, an instance of the computer job execution loop may comprise the following operations:
A determination as to whether or not execution of the computer job is finished may be performed (205). In cases where execution of the computer job is finished (205b), the scheduling of the computer job in the hybrid computing environment may end (210).

In cases where execution of the computer job is not finished (205a), at least one task (or part) of the computer job may still need to be executed, and execution of the task may proceed (206). The operations of executing the job part may comprise determining (207) whether or not executing the job part requires use of quantum processing resources. For example, the high-level scheduler may be configured to determine whether or not the job part is quantum. Depending on the embodiment, determining whether or not a job (or part thereof) is quantum may be performed by any suitable processing unit of the proposed hybrid computer, such as for example the first scheduler, the second scheduler, etc.

In cases where executing the job part does not (207a) require use of quantum processing resources, the job part may be scheduled by the high-level scheduler for execution, and executed (208a) by one or more of the classical processing resources of the computer system, further to which the instance of the computer job execution loop may end (209).

In cases where executing the job part requires (207b) use of quantum processing resources, scheduling of the job part may be offloaded (208b) to the low-level scheduler, which in some embodiments may be configured for specifically handling computer tasks the execution of which involves the use of quantum processing resources. For example, the low-level scheduler may be configured as a QPU scheduler, that is, as a scheduler specifically designed for scheduling execution of quantum computing tasks. In some embodiments, the offloading of the job part to the low-level scheduler may comprise the following operations: The job part may be pushed to the low-level scheduler (208b_1), and the low-level scheduler may wait (208b_2) for obtaining results related to execution of the job part by the quantum processing resources. Thereafter, the instance of the computer job execution loop may end (209).

Depending on the embodiments, various schemes for managing the quantum processing resources based on allocation of the virtual quantum processing resources may be used according to the present subject disclosure.

In one or more embodiments, the low-level scheduler may not have information regarding availability of a quantum processing resource for executing a quantum computing task, in contrast to the quantum processing resource which itself may have information regarding its availability for executing a quantum computing task. For example, as a quantum processing resource is not always available, starting execution of a computer task on a virtual quantum processing resource may not in some embodiments force execution of the computer task on a (real) quantum processing resource. Therefore it may be desirable to configure the low-level scheduler to implement a "pop" mechanism according to which quantum processing resources self-schedule the execution of computer tasks which have been allocated to virtual quantum processing resources.

For example, in some embodiments, a queue (e.g. configured as a FIFO (First-In First-Out) queue) may be implemented between the virtual quantum processing resources and the (real) quantum processing resources of the hybrid computer. In some embodiments, this queue may be used as an interface between virtual quantum processing resources and the (real) quantum processing resources of the hybrid computer. In some embodiments, the queue may be implemented as a queue of computing tasks to be executed for which virtual quantum processing resources have been allocated by the low-level scheduler. The low-level scheduler may be configured for starting execution of a computing task on a virtual quantum processing resource by pushing an identifier of the computing task in the queue.

In some embodiments, one or more (or, depending on the embodiments, each) of the quantum processing resources of the hybrid computer may be configured for using a computing task popping mechanism. In some embodiment, the computing task popping mechanism may comprise: assuming that the quantum processing resource is available for executing quantum computing tasks and that it is not already busy with execution of a quantum computing task, popping a computation task from the queue and executing the task. For example, the quantum processing resource may be configured for popping an identifier of a computing task from the queue, fetching in memory the computing task, and executing it. In some embodiments, the quantum processing resource may further be configured for, once execution of the computing task is completed, providing data related to execution of the computing task to the low-level scheduler.

Using a computing task popping mechanism as proposed in embodiments of the present subject disclosure has several advantages, including ensuring that a computation starts on the quantum processing resource (e.g. on a QPU) only if the quantum processing resource device is operational, and ensuring (through use of a queue) that a single job is running at a given time (use of the queue provides a locking mechanism for the quantum processing resources).

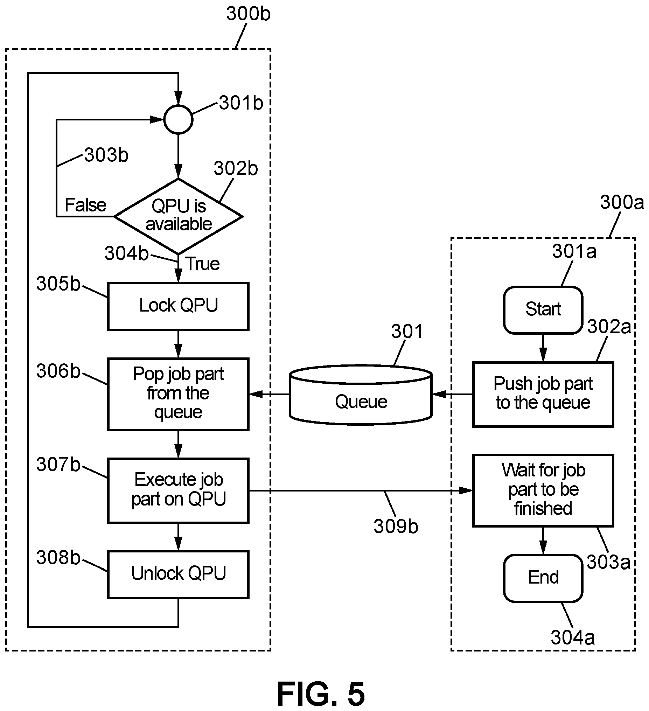

Fig. 5 shows a flowchart illustrating an exemplary offloading of a computer job part according to one or more embodiments of the present subject disclosure.

As shown on Fig. 5, in one or more embodiments, operations related to the offloading of a computer job part performed by the low-level scheduler (300a) may start (301a) for a part of a computer job which is processed by the low-level scheduler (300a) for scheduling execution of the job part by a quantum processing resource (300b) of the computer system.

In one or more embodiments, the job part being processed may be pushed (302a) to a queue (301) which is configured at an interface between the low-level scheduler (300a) and the quantum processing resource (300b). In some embodiments, the quantum processing resource (300b) and the queue (301) are operatively coupled with each other, and the low-level scheduler (300a) and the queue (301) are also operatively coupled with each other. It will be appreciated by those having ordinary skill in the relevant art that any suitable architecture for configuring a queue unit in-between the low-level scheduler and one or more quantum processing resources of the computer system, such as an architecture in which the queue is integrated in and managed by a low-level scheduler, may be used in place of the architecture shown on Fig. 5, which is given by way of example only.

Once the job part has been inserted in the queue (301), it is available for processing (execution) by one of the quantum processing resources operatively connected to the queue (301) (e.g. the quantum processing resource (300b) of Fig. 5).

At the quantum processing resource (300b), the operations may start, in one or more embodiments, with a status monitoring loop (301b) for determining (302b) whether the quantum processing resource (e.g. QPU) (300b) is available for processing computer jobs (or tasks or parts of job). In cases where the resource is not available (303b), a new instance of the loop may be started (301b) in order to wait until the resource is available. In cases where the resource is available (304b), in one or more embodiments, the resource may be configured for entering (305b) a lock mode (for example by locking the QPU) in which it the resource (300b) is no longer available, and, for example once locked, for popping (306b) a job part to be executed from the queue (301).

Once the job part has been obtained from the queue (301), at least in part, it may be executed (307b) by the quantum processing resource (300b). Further to executing the job part, the quantum processing resource (300b) sends (309b) information regarding execution of the job part to the low-level scheduler (300a), leaves (308b) the lock mode (for example by unlocking the QPU), and then resumes operations of the status monitoring loop (301b). For example, the quantum processing resource (300b) may send one or more of data for identifying the job part that was executed, and data related to an execution status (e.g. complete, uncomplete, failed, possibly together with an error code) of the job part.

At the low-level scheduler side (300a), in one or more embodiments, the low-level scheduler may be configured to wait (303a) until it receives, for example from a quantum processing resource (e.g. the resource (300b)), information regarding execution of the job part that was previously pushed (302a) to the queue (301). Once such information has been received, operations for processing the job part by the low-level scheduler may end (304a).

In one or more embodiments, a watch mechanism may be used by the low-level scheduler for monitoring availability of quantum processing resources of a computer system.

Such a watch mechanism may advantageously provides means for monitoring the status of quantum processing resources (e.g. QPUs) as such resources are, for now, unreliable. For example, referring back to Fig. 3a, the HPC cluster (31) of the hybrid computing environment (30) may not be informed (e.g. through a notification message) of a quantum processing resource (32a) of the quantum cluster (32) which has become unavailable.

In one or more embodiments, the watch mechanism may comprise performing a ping on each of the monitored quantum processing resources of the computer system, for example at regular intervals.

In some embodiments, one or more of the following actions may be performed in cases where a successful response to the ping is not received, for example during a given time period following the ping:
The corresponding quantum processing resource may be declared unavailable at the system level. In some embodiments where quantum processing resources are associated with virtual quantum resources (e.g. scheduled by a high-level scheduler), the virtual quantum resources associated with the corresponding quantum processing resource may be disassociated with the resource, and associated with other quantum processing resources that are known to be available, if any. In other embodiments where quantum processing resources are associated with virtual quantum resources (e.g. scheduled by a high-level scheduler), the virtual quantum resources associated with the corresponding quantum processing resource may be set to be unavailable. In addition, in some embodiments, the running jobs using said virtual quantum resources may be requeued. For example, scheduling of the running jobs using said virtual quantum resources may be cancelled, and these running jobs may be rescheduled.

In some embodiments, the watch mechanism may further comprise setting as available virtual quantum processing resources that were previously set as unavailable upon receiving information that the quantum processing resource (e.g. the QPU) which was (or is still) associated with these virtual quantum processing resources is operational (e.g. if the QPU matching previously down virtual resources indicates that it is running).

In one or more embodiments, the watch mechanism will be configured to ensure that a quantum computing node of a computer system is set in a "not accepting jobs" state upon detecting or receiving information that the quantum processing resource (e.g. QPU) of the node is not available.

The proposed watch mechanism advantageously avoids that a virtual resource associated with a quantum processing resource be viewed as available in cases where the quantum processing resource is in fact not available. It also advantageously mirrors the status of quantum processing resources through managing a status of corresponding virtual quantum processing resources, which suits well practical situations in which quantum resources that are not available cannot be removed from a cluster.

In order to pop computer jobs to be executed from a queue, the quantum processing resources may be configured in one or more embodiments with classical capabilities. That is, a quantum processing resource may be capable of executing part of a computer job which does not require use of a quantum processing resources for executing quantum computations.

In some embodiments, classical capabilities of a quantum processing resource (e.g. a QPU) may be used to execute one or more classical (non-quantum) parts of a computer job to be executed. Using these classical resources advantageously reduces the latency between the execution of a classical part of a computer job and a quantum part of the computer job.

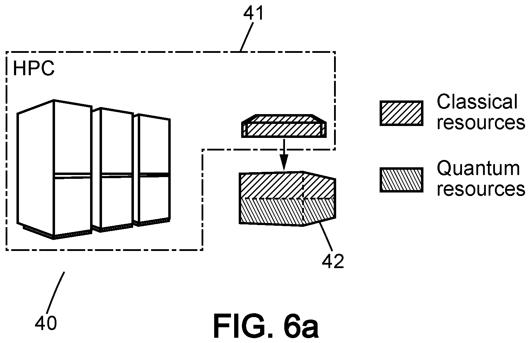

Fig. 6a shows an exemplary architecture of a hybrid computing environment (40) according to one or more embodiments of the present subject disclosure.

Shown on Fig. 6a is a hybrid computing environment (40) comprising a HPC cluster (41) comprising classical, that is, non-quantum (e.g. CPUs), processing resources. In such embodiments, quantum processing resources (e.g. QPU processing resources) of the hybrid computing environment may be kept in an extended quantum cluster (42) separate, yet operatively connected to, the HPC cluster (41).

In contrast with the exemplary architecture shown on Fig. 3a, the extended quantum cluster (42) may comprise quantum processing resources (e.g. QPUs) having both classical processing capabilities and quantum processing capabilities.

Likewise the architecture shown on Fig. 3a, the architecture shown on Fig. 6a advantageously allows a smooth transition from a classical HPC cluster (with no quantum processing resources) with a scheduler managing classical processing resources to a HPC cluster in a hybrid computing environment with a scheduler managing both classical processing resources and virtual quantum processing resources: Advantageously, the HPC cluster (41) in the hybrid computing environment (40) may be implemented with any suitable HPC scheduler, such as Slurm.

In addition, the architecture shown on Fig. 6a advantageously allows offloading both classical and quantum computations to the extended quantum cluster (42) as such cluster is advantageously configured with classical and quantum processing capabilities.

Further, in one or more embodiments in which quantum processing resources having additional classical computing capabilities are used, in addition to using virtual quantum processing resources associated with quantum processing resources, the classical resources of a quantum processing resource may also be virtualized.

For example, in one or more embodiments, virtual quantum processing resources may be associated with quantum processing capabilities of quantum processing resources, and classical quantum processing resources may be associated with classical processing capabilities of quantum processing resources

In some embodiments, the scheduler in charge of managing these resources may (for example based on a user request) allocate both virtual classical and virtual quantum resources to execution of a computer job, and as a result the whole computations for executing the job may run on the associated quantum resource having extended capabilities.

Performing classical and quantum computations directly on quantum processing resource (e.g. a QPU) with extended capabilities advantageously improves the latency between execution of a quantum part and a classical part of a computer job. The whole computation is then executed in a faster way.

The whole computation is popped by the QPU if the QPU is alive, and the internal queue of the scheduler ensure one job at a time is using the quantum part of the extended-QPU.

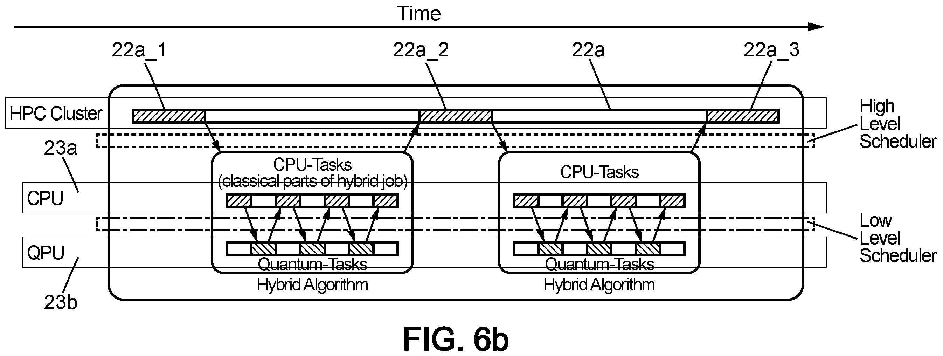

Figure 6b shows an exemplary allocation scheme of resources according to one or more embodiments of the present subject disclosure.

Fig. 6b illustrates an exemplary job flow of a heterogeneous quantum-classical computer job with hybrid algorithms on a hybrid computer according to one or more embodiments of the present subject disclosure.

Fig. 6b illustrates the time sequence of execution on computing resources of a hybrid computer of parts (22a_1, 22a_2, 22a_3) of a computing job 22a. The computer job 22a may be considered hybrid or heterogeneous in that it comprises one or more classical (non-quantum) parts, and one or more quantum parts. The hybrid computer may be configured with one or more classical (non-quantum) resources (e.g. a CPU 23a) and one or more quantum resources (e.g. a QPU 23b), and may be further configured with a first (high-level) scheduler and a second (low-level) scheduler according to embodiments of the present subject disclosure. As illustrated on the figure, the scheduling of the first part (22a_1) may be managed by the first (high-level) scheduler, which offloads all the quantum parts of the first part (22a_1) to the second (low-level) scheduler. Once execution of a quantum part of a job on a quantum processing resource as managed by the second scheduler is complete, execution of a following part of the job on a classical resource as managed by the first scheduler may be started. As a result, execution of the first part 22a_1 of the computer job 22a on processing resources of the hybrid computer is segmented in time with quantum tasks being executed on a quantum processing resource of the hybrid computer (as scheduled by the second scheduler), and classical tasks being executed on a classical resource of the hybrid computer (as scheduled by the first scheduler). The computer job is segmented in order to distribute (for example over time) its execution to a quantum processing resource of the hybrid computer (as scheduled by the second scheduler) or to a classical resource of the hybrid computer (as scheduled by the first scheduler). The sequence of execution of the first (22a_1), second (22a_2) and third (22a_3) and parts thereof shown on Fig. 6b is illustrative of an exemplary sequence, and other sequences may be contemplated in other embodiments of the present subject disclosure.

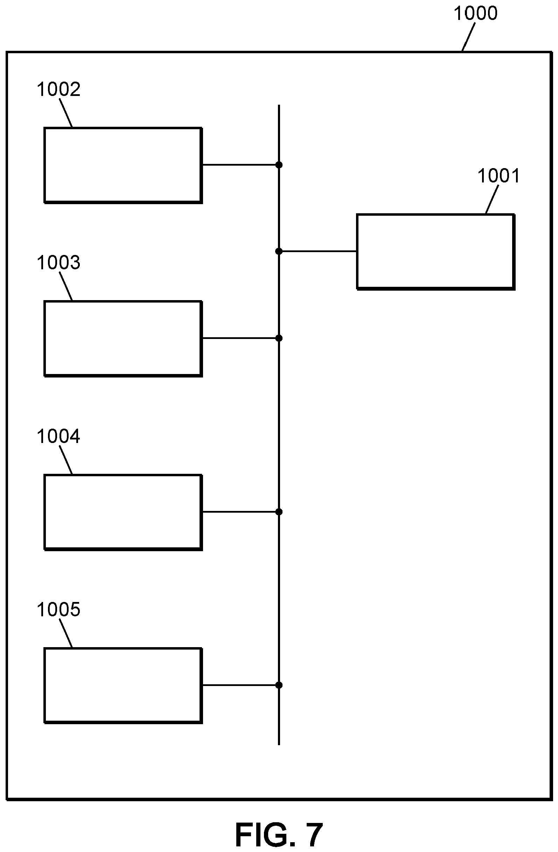

Fig. 7 illustrates an exemplary apparatus 1000 configured to use a computer job processing feature in accordance with embodiments of the present subject disclosure. The apparatus 1000 may, depending on the embodiment, be comprised in a HPC cluster, an electronic circuit, an electronic board, an electronic component, chip, a QPU or any other suitable processing platform.

The apparatus 1000, which may comprise one or more computers, includes a control engine 1001, a scheduling engine 1002, a computing engine 1003, a data interface engine 1004, and a memory 1005.

In the architecture illustrated on Fig. 7, all of the scheduling engine 1002, computing engine 1003, data interface engine 1004, and memory 1005 are operatively coupled with one another through the control engine 1001.

In one or more embodiments, the scheduling engine 1002 may be configured with first and second schedulers to perform various functions or embodiments provided in the present subject disclosure, including with respect to scheduling computer jobs or parts thereof. In some embodiments, the scheduling engine 1002 may be implemented in software and incorporated in a computing machine running on a HPC cluster, configured according to embodiments of the present subject disclosure.

In one or more embodiments, the computing engine 1003 may be configured with one or more classical processing resources (e.g. one or more CPUs) and one or more quantum processing resources (e.g. one or more QPUs) to perform various functions or embodiments provided in the present subject disclosure, including with respect to executing computer jobs or parts thereof.

In one or more embodiments, the data interface engine 1004 may be configured to provide a data interface to the apparatus 1000, including for exchanging data with another apparatus.

The control engine 1001 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 1001 may also comprise, or may be in communication with, computer storage media, such as, without limitation, the memory 1005, capable of storing computer program instructions or software code that, when executed by the processor, causes the processor to perform the elements described herein. In addition, the memory 1005 may be any type of data storage computer storage medium, capable of storing multimedia content data, service data, service list data, customization data, personalization data and/or channel data for use according to one or more embodiments of the present subject disclosure, coupled to the control engine 1001 and operable with the data interface engine 1004, the computing engine 1003, and the scheduling engine 1002 to facilitate processing of data stored in association therewith.

In embodiments of the present subject disclosure, the apparatus 1000 is configured for performing the processing methods described herein.

It will be appreciated that the apparatus 1000 shown and described with reference to Fig. 7 is provided by way of example only. Numerous other architectures, operating environments, and configurations are possible. Other embodiments of the apparatus may include fewer or greater number of components and may incorporate some or all of the functionality described with respect to the apparatus components shown in Fig. 7. Accordingly, although the control engine 1001, data interface engine 1004, computing engine 1003, scheduling engine 1002, and memory 1005 are illustrated as part of the apparatus 1000, no restrictions are placed on the location and control of components 1001 - 1005. In particular, in other embodiments, components 1001 - 1005 may be part of different entities or computing systems.

Although this subject disclosure has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the subject disclosure. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for processing a computer job to be executed on a hybrid computer configured with processing resources comprising one or more central processing unit, CPU, processing resources and at least one quantum processing unit, QPU, processing resources, the method comprising, wherein the computer job comprises a quantum computation part to be executed on the at least one QPU processing resources:
• Processing the computer job by a first scheduler of the hybrid computer, wherein the first scheduler is configured for scheduling the processing of computation tasks by processing resources of the hybrid computer among the one or more CPU processing resources and the at least one QPU processing resources, wherein the processing of the computer job by the first scheduler comprises:
∘ Upon receiving a request for quantum processing resources for execution of the computer job, offloading the scheduling of a portion of the computer job comprising the quantum computing part on processing resources of the hybrid computer to a second scheduler of the hybrid computer, wherein the second scheduler is configured for scheduling the processing of computation tasks by the at least one QPU processing resources of the hybrid computer; and
∘ Receiving, by the first scheduler, status data regarding execution of the portion of the computer job comprising the quantum computing part.

2. The method according to claim 1, further comprising: scheduling, by the second scheduler, processing of the portion of the computer job comprising the quantum computing part by the at least one QPU processing resources of the hybrid computer.

3. The method according to any of the preceding claims, further comprising: allocating, by the first scheduler, a virtual quantum computing resource for execution of the quantum computation part by a QPU processing resource of the at least one QPU processing resources of the hybrid computer.

4. The method according to claim 3, wherein the virtual quantum computing resource is mapped with the QPU processing resource of the at least one QPU processing resources of the hybrid computer.

5. The method according to any of claims 3 and 4, further comprising: executing, by the QPU processing resource mapped with the virtual quantum computing resource, the quantum computing part.

6. The method according to claim 4, wherein executing the quantum computing part by the virtual quantum computing resource comprises: requesting, from the second scheduler, scheduling of processing of the quantum computing part by the at least one QPU processing resources of the hybrid computer.

7. The method according to any of the preceding claims, further comprising, by a quantum resource watch computer job running on the hybrid computer: pinging for status one of the at least one QPU processing resources, and upon determining a failing status of the one of the at least one QPU processing resources further to the pinging of the one of the at least one QPU processing resources, removing the one of the at least one QPU processing resources from a pool of available QPU processing resources for processing the computer job.

8. The method according to claim 7, further comprising: setting a virtual quantum computing resource corresponding to the one of the at least one QPU processing resources as non-available for processing the computer job.

9. The method according to any of claims 7 and 8, further comprising: rescheduling, by the second scheduler, running computer jobs scheduled for execution by the one of the at least one QPU processing resources.

10. The method according to any of the preceding claims, wherein the computer job further comprises a non-quantum computation part to be executed on the one or more CPU processing resources, and wherein one or more of the at least one QPU processing resources have non-quantum processing capabilities, the method further comprising: allocate, by the first scheduler, a virtual quantum computing resource for execution of the quantum computation part by the one or more of the at least one QPU processing resources of the hybrid computer, and a virtual non-quantum processing resources for execution of one or more parts of the non-quantum computation part by the one or more of the at least one QPU processing resources of the hybrid computer.

11. The method according to claim 10, wherein the virtual quantum processing resources and virtual non-quantum processing resources are mapped with a QPU processing resource of the at least one QPU processing resources of the hybrid computer.

12. The method according to any of claims 10 and 11, further comprising: executing, by the QPU processing resource mapped with the virtual quantum processing resources and the virtual non-quantum processing resources, the quantum computing part and the one or more parts of the non-quantum computation part.

13. An apparatus, the apparatus comprising a processor and a memory operatively coupled to the processor, wherein the apparatus is configured to perform a method according to any of claims 1 to 12.

14. A computer program product comprising computer program code tangibly embodied in a computer readable medium, said computer program code comprising instructions to, when provided to a computer system and executed, cause said computer to perform a method according to any of claims 1 to 12.

15. A data set representing, for example through compression or encoding, a computer program product according to claim 14.
